# EUROPEAN PATENT APPLICATION

(11) **EP 4 746 107 A1**
(43) Date of publication of application: **20.05.2026**
(21) Application number: 25206349.0
(22) Date of filing: 02.10.2025
(51) Int. Cl.: H01M 10/42, H01M 10/613, H01M 10/647, H01M 10/6555, H01M 10/6557, H01M 50/209, H01M 50/284, H01M 50/289, H01M 50/519

(54) **POWER STORAGE DEVICE**

(30) Priority: 13.11.2024 JP 2024198067
(71) Applicant: TOYOTA JIDOSHA KABUSHIKI KAISHA, Toyota-shi, Aichi-ken 471-8571 (JP)
(72) Inventor: TSUNEKAWA, Kunihiro, Toyota-shi, Aichi-ken, 471-8571 (JP); NAKADA, Koki, Toyota-shi, Aichi-ken, 471-8571 (JP); TAKESHITA, Shinya, Toyota-shi, Aichi-ken, 471-8571 (JP); TAKAHASHI, Naoyuki, Toyota-shi, Aichi-ken, 471-8571 (JP); KIMURA, Ryo, Toyota-shi, Aichi-ken, 471-8571 (JP); KATO, Kazuhito, Toyota-shi, Aichi-ken, 471-8571 (JP); SHIMONAKA, Toshihiro, Toyota-shi, Aichi-ken, 471-8571 (JP); ICHISAWA, Kota, Toyota-shi, Aichi-ken, 471-8571 (JP); MIYAHARA, Kenta, Toyota-shi, Aichi-ken, 471-8571 (JP)
(74) Representative: Winter, Brandl - Partnerschaft mbB

(57) **Abstract**

A power storage device (B) includes: a first power storage cell (10, 1(4)) having a first electrode terminal (11); a second power storage cell (10, 1(5)) having a second electrode terminal (12); and a wiring board (200). The wiring board (200) includes: a substrate (201); a first conductor member (211a) connected to the first electrode terminal (11); and a second conductor member (211b) connected to the second electrode terminal (12). The power storage device (B) further includes a component (40A, 40B, 40C, 40D, 40E, 40F, 40G, 71, 22D) located between the first power storage cell (10, 1(4)) and the second power storage cell (10, 1(5)). A recess (h3, h3A, h3B, h4, h4A, h4B, h4C, h4D, h6) is formed in the substrate (201). The component (40A, 40B, 40C, 40D, 40E, 40F, 40G, 71, 22D) has a protrusion (M3, M3A, M3B, M4, M4A, M4B, M4C, M4D, M6) protruding to the wiring board (200) side and fitting into the recess (h3, h3A, h3B, h4, h4A, h4B, h4C, h4D, h6).

## Description

### CROSS REFERENCE TO RELATED APPLICATIONS

This nonprovisional application is based on Japanese Patent Application No. 2024-198067 filed on November 13, 2024 with the Japan Patent Office, the entire contents of which are hereby incorporated by reference.

### BACKGROUND

### Field

The present disclosure relates to a power storage device including a plurality of power storage cells.

### Description of the Background Art

Chinese Patent Laying-Open No. 116686151 discloses a power storage device including a plurality of power storage cells fixed in a case (accommodation cavity). An electrode terminal of each of the power storage cells is provided to face a bottom wall of the case.

### SUMMARY

The power storage device described in Chinese Patent Laying-Open No. 116686151 has a problem in that it is difficult to adjust a position of the electrode terminal of each of the plurality of power storage cells when the power storage cells are mounted.

The present disclosure has been made to solve the above-described problem and an object thereof is to provide a power storage device in which a plurality of power storage cells are easy to be mounted at appropriate positions.

According to the present disclosure, a power storage device described below is provided.

(Clause 1) The power storage device includes: a first power storage cell having a first electrode terminal; a second power storage cell having a second electrode terminal; and a wiring board. The wiring board includes: a substrate; a first conductor member connected to the first electrode terminal; and a second conductor member connected to the second electrode terminal. The power storage device further includes a component located between the first power storage cell and the second power storage cell. A recess is formed in the substrate. The component has a protrusion protruding to the wiring board side and fitting into the recess.

In the power storage device, the recess of the wiring board (substrate) and the protrusion between the power storage cells make it easier to align positions of the conductor members of the wiring board with positions of the electrode terminals of the power storage cell.

(Clause 2) In the power storage device according to Clause 1, the protrusion protrudes farther to the wiring board side than each of the first electrode terminal and the second electrode terminal.

According to the above-described configuration, when the first power storage cell and the second power storage cell are mounted on the wiring board, position adjustment by the protrusion and the recess that are located between these power storage cells is more easily performed before the electrode terminals of each power storage cell hit against the wiring board.

(Clause 3) In the power storage device according to Clause 1 or 2, the first conductor member and the second conductor member are disposed on bottom surfaces of a first recess and a second recess formed in the substrate, respectively.

According to the first recess and the second recess, an amount of protrusion of each of the first conductor member and the second conductor member from a surface of the substrate can be reduced. Therefore, when the first power storage cell and the second power storage cell are mounted on the wiring board, position adjustment by the protrusion and the recess is more easily performed before the electrode terminals of each power storage cell hit against the conductor members of the wiring board.

(Clause 4) In the power storage device according to any one of Clauses 1 to 3, a side wall of the recess has a tapered shape.

According to the above-described configuration, the tapered surface (side wall) of the recess makes it easier to adjust the position of each power storage cell.

(Clause 5) In the power storage device according to any one of Clauses 1 to 4, each of the recess and the protrusion has a circular or rectangular planar shape.

According to the above-described configuration, the recess and the protrusion as designed are more easily obtained with high accuracy.

(Clause 6) In the power storage device according to any one of Clauses 1 to 4, each of the recess and the protrusion has a cross-shaped or T-shaped planar shape.

According to the recess and the protrusion, positions in two directions orthogonal to each other are more easily adjusted with high accuracy.

(Clause 7) In the power storage device according to any one of Clauses 1 to 6, the component is an insulating member.

The component can increase the electrical insulation between the adjacent two power storage cells and adjust the position of each power storage cell.

(Clause 8) In the power storage device according to any one of Clauses 1 to 6, the component is a cooler.

The component can cool the adjacent two power storage cells and adjust the position of each power storage cell.

(Clause 9) In the power storage device according to any one of Clauses 1 to 6, the component is an impact absorbing member provided on a cooler.

The component can protect the cooler and adjust the position of each power storage cell.

(Clause 10) In the power storage device according to any one of Clauses 1 to 9, the substrate is made of an insulating material. The first electrode terminal and the second electrode terminal are connected to the first conductor member and the second conductor member, respectively, with the first electrode terminal and the second electrode terminal facing vertically downward.

According to the above-described configuration, the protrusion between the power storage cells can be fitted into the recess of the wiring board (substrate) by gravity. This makes wiring and position adjustment of each power storage cell easier.

A vehicle including the power storage device according to any one of Clauses 1 to 10 may be provided as another embodiment.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a vehicle including a power storage device according to an embodiment of the present disclosure.
Fig. 2 is a diagram showing a schematic configuration of the power storage device according to the embodiment of the present disclosure.
Fig. 3 is a diagram of the inside of a lower case of the power storage device according to the present embodiment when viewed from above.
Fig. 4 is a diagram showing the lower case of the power storage device according to the present embodiment in an empty state.
Fig. 5 is a diagram showing an exemplary configuration of a power storage cell according to the present embodiment.
Fig. 6 is a diagram of each power storage cell in the lower case shown in Fig. 3 when viewed from below.
Fig. 7 is a diagram showing an exemplary configuration of a wiring board in the lower case shown in Fig. 3.
Fig. 8 is a diagram showing a configuration of a power storage portion in the lower case shown in Fig. 3.
Fig. 9 is an end view of the power storage device taken along line IX-IX in Fig. 3.
Fig. 10 is an end view of the power storage device taken along line X-X in Fig. 3.
Fig. 11 is an end view of the power storage device taken along line XI-XI in Fig. 3.
Fig. 12 is an end view of the power storage device taken along line XII-XII in Fig. 3.
Fig. 13 is a diagram for illustrating details of a protrusion shown in Fig. 11.
Fig. 14 is an enlarged view of a part of the power storage device in Fig. 11.
Fig. 15 is a diagram showing a first modification of a protrusion for positioning shown in Fig. 8.
Fig. 16 is a diagram showing a recess corresponding to the protrusion according to the first modification shown in Fig. 15.
Fig. 17 is a diagram showing a second modification of the protrusion for positioning shown in Fig. 8.
Fig. 18 is a diagram showing a recess corresponding to the protrusion according to the second modification shown in Fig. 17.
Fig. 19 is a diagram showing a third modification of the protrusion for positioning shown in Fig. 8.
Fig. 20 is a diagram showing a recess corresponding to the protrusion according to the third modification shown in Fig. 19.
Fig. 21 is a diagram showing a modification of the configuration shown in Fig. 17.
Fig. 22 is a diagram showing a first modification of the configuration shown in Fig. 13.
Fig. 23 is a diagram showing a second modification of the configuration shown in Fig. 13.

### DESCRIPTION OF THE PREFERRED EMBODIMENTS

An embodiment of the present disclosure will be described in detail with reference to the drawings. In the drawings, the same or corresponding elements have the same reference characters allotted and description thereof will not be repeated. In each figure referred to below, an X axis, a Y axis and a Z axis represent three axes orthogonal to one another. In the following description, a direction indicated by an arrow along each of the X axis, the Y axis and the Z axis is expressed with "+", and a direction opposite thereto is expressed with "-".

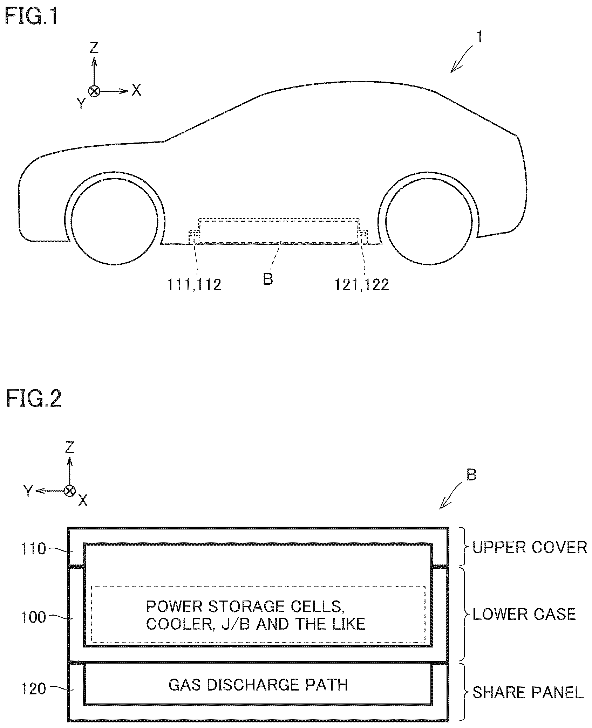

Fig. 1 is a diagram showing a vehicle including a power storage device according to the present embodiment. In Fig. 1, a -X side corresponds to a front side of a vehicle 1 and a +X side corresponds to a rear side of vehicle 1. A -Z side corresponds to a lower side (vertically lower side) and a +Z side corresponds to an upper side (vertically upper side).

Referring to Fig. 1, vehicle 1 includes a power storage device B. Power storage device B may function as a power storage device for driving, which is generally referred to as "battery pack". Vehicle 1 is configured to be capable of traveling using electric power outputted from power storage device B. Vehicle 1 may include a motor that rotates a driving wheel of vehicle 1 using electric power supplied from power storage device B. Vehicle 1 is, for example, a battery electric vehicle (BEV) that does not include an internal combustion engine. However, the present disclosure is not limited to the above. Vehicle 1 may be a hybrid electric vehicle (HEV) or a plug-in hybrid electric vehicle (PHEV) that includes an internal combustion engine, or may be another electrically powered vehicle (xEV).

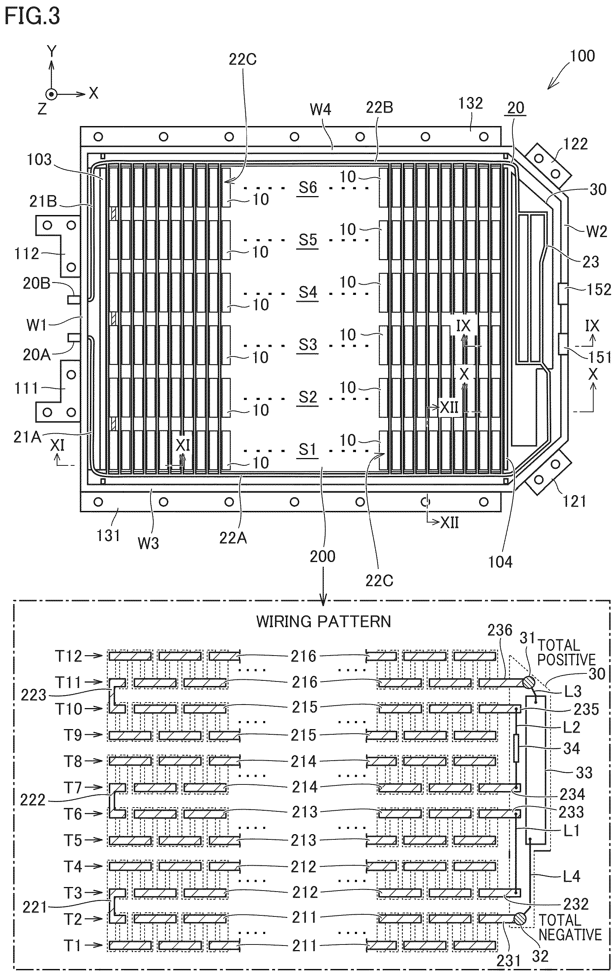

Power storage device B is, for example, placed under the floor of vehicle 1. Power storage device B may be connected to a body of vehicle 1. Power storage device B has brackets 111 and 112 at a -X-side end and brackets 121 and 122 at a +X-side end (see Fig. 3 described below). Although not shown in Fig. 1, power storage device B further has brackets (e.g., brackets 131 and 132 shown in Fig. 3 described below) at both ends in the Y direction. These brackets are fastened to, for example, a floor member of vehicle 1, whereby power storage device B is connected to the body (e.g., a floor panel) of vehicle 1. At least a part of a housing of power storage device B may function as a frame member of vehicle 1. However, the present disclosure is not limited to the above-described configuration. Power storage device B may be placed on the floor of vehicle 1.

Fig. 2 is a diagram showing a schematic configuration of power storage device B. Referring to Fig. 2, power storage device B includes a lower case 100 (first housing member), an upper cover 110 (second housing member) and a share panel 120 (third housing member), and these components function as the housing of power storage device B. Lower case 100 opens upward (+Z side) to accommodate a plurality of power storage cells and various components relating to these power storage cells. As will be described in detail below, lower case 100 accommodates the power storage cells, a cooler, a junction box (hereinafter denoted as "J/B") and the like (see Fig. 3). Each of upper cover 110 and share panel 120 is fixed to lower case 100. Upper cover 110 is disposed above lower case 100 to function as a lid of lower case 100. Share panel 120 is disposed below (-Z side) lower case 100 to suppress an impact on lower case 100 caused by road surface interference. A gas discharge path is formed between lower case 100 and share panel 120. Upper cover 110 and share panel 120 correspond to a +Z-side end and a -Z-side end of power storage device B, respectively. Basically, the housing of power storage device B seals a space (internal space) in the housing. However, when a valve provided in the housing is opened, the internal space communicates with an external space through the valve.

Fig. 3 is a diagram of the inside of lower case 100, with upper cover 110 removed, when viewed from the +Z side. Referring to Fig. 3, lower case 100 accommodates power storage stacks S1 to S6, a cooling apparatus 20, a battery circuit unit 30, and a wiring board 200. Each of power storage stacks S1 to S6 includes a plurality of power storage cells 10 arranged in the X direction. Details of a configuration of each power storage cell will be described below. Wiring board 200 has a wiring pattern for power storage stacks S1 to S6. Wiring board 200 may function as a terminal block. Cooling apparatus 20 includes ports 20A and 20B, pipes 21A and 21B extending in the Y direction, pipes 22A and 22B extending in the X direction, a plurality of coolers 22C extending in the Y direction, and a cooling pipe 23. These components are connected in the order of port 20A, pipe 21A, pipe 22A, cooling pipe 23, pipe 22B, pipe 21B, and port 20B from the upstream side. Pipe 22A and pipe 22B are connected through the plurality of coolers 22C (cooling plates) arranged in the X direction. Cooler 22C is disposed between the power storage cells adjacent to each other in each of power storage stacks S1 to S6. These power storage cells adjacent to each other are cooled by a coolant flowing through a flow path formed in cooler 22C. Cooler 22C has a flow path communicating with each of pipes 22A and 22B. Cooling pipe 23 is configured to cool battery circuit unit 30. Battery circuit unit 30 may be a single unit, or may include a plurality of units.

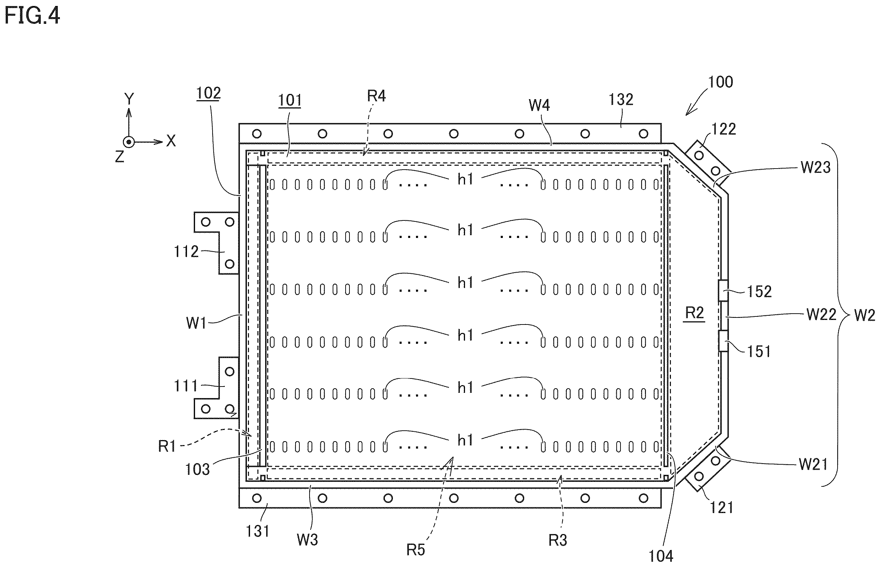

Fig. 4 is a diagram showing lower case 100 in an empty state (a state in which lower case 100 does not accommodate anything).

Referring to Fig. 4, lower case 100 has a bottom wall 101 (bottom portion) and a perimeter wall 102 (peripheral edge portion). Bottom wall 101 includes regions R1 to R5. Perimeter wall 102 includes side walls W1 to W4. Side walls W1, W2, W3, and W4 correspond to a -X-side end, a +X-side end, a -Y-side end, and a +Y-side end of lower case 100, respectively. Side wall W2 includes side walls W21 to W23. Side walls W21 to W23 are located on the +X side of side walls W3 and W4 extending in the X direction, and among side walls W21 to W23, side wall W22 is located farthest to the +X side. Brackets 121 and 122 (Fig. 1) are provided on side walls W21 and W23, respectively. Gas discharge valves 151 and 152 are provided in side wall W22. Side wall W22 is coupled to side walls W3 and W4 through side walls W21 and W23, respectively. Ends of side walls W3 and W4 on the opposite side (-X side) are coupled to each other through side wall W1 extending in the Y direction. Brackets 131 and 132 are provided on side walls W3 and W4, respectively. Brackets 111 and 112 (Fig. 1) are provided on side wall W1. Each of side walls W1 to W4 rises from a peripheral edge portion of bottom wall 101 to the +Z side. An internal space of lower case 100 is surrounded by side walls W1 to W4.

Partition walls 103 and 104 extending in the Y direction are provided on bottom wall 101. Each of partition walls 103 and 104 may be fastened to bottom wall 101. Partition wall 104 is located on the +X side of partition wall 103. Each of partition walls 103 and 104 rises from bottom wall 101 to the +Z side. Region R5 is a rectangular region disposed in the center of lower case 100 and is partitioned by partition walls 103 and 104. Region R5 is a region where wiring board 200 and power storage stacks S1 to S6 (Fig. 3) are disposed. Region R5 is located between partition walls 103 and 104 (on an inner side of partition wall 103 and an inner side of partition wall 104). Each of partition walls 103 and 104 may be a cross frame.

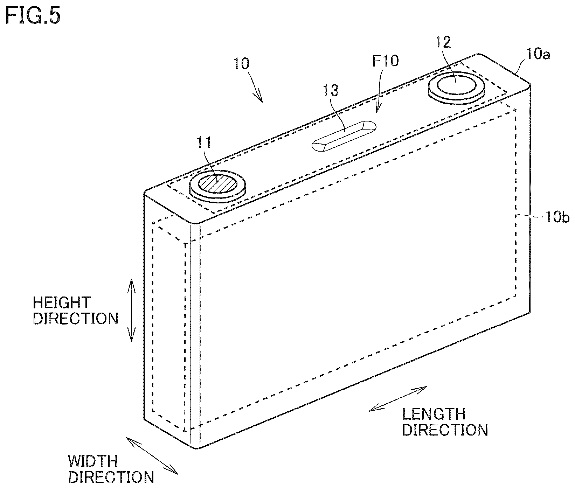

An opening h1 is formed at a position where each power storage cell is disposed in region R5. Each of a plurality of openings h1 is disposed to face a below-described valve 13 (see Fig. 5) of power storage cell 10 in the Z direction. The plurality of openings h1 are arranged in the X direction, thereby forming a row of openings h1. The number of rows of openings h1 corresponding to the number of the power storage stacks (e.g., six) are formed in bottom wall 101. Each of openings h1 is, for example, a long hole extending through bottom wall 101. However, the shape of each of openings h1 can be changed as appropriate. Each of openings h1 is formed by, for example, punching.

Region R3 and region R4 are provided on the -Y side and on the +Y side of region R5, respectively. Region R1 is provided on an outer side (-X side) of partition wall 103. Region R2 is provided on an outer side (+X side) of partition wall 104. Region R2 is a region where battery circuit unit 30 (Fig. 3) is disposed. Region R2 is located at the +X-side end of lower case 100 and is partitioned by partition wall 104 and side wall W2.

In the present embodiment, each of bottom wall 101, perimeter wall 102 and partition walls 103 and 104 is made of metal. However, the material can be changed as appropriate. Bottom wall 101, perimeter wall 102 and partition walls 103 and 104 may be made of the same material, or may be made of different materials. Bottom wall 101, perimeter wall 102 and partition walls 103 and 104 may be separately formed and joined, or may be integrally formed in a seamless manner.

Referring to Figs. 3 and 4, ports 20A and 20B are provided in side wall W1. Ports 20A and 20B are located in substantially the center of side wall W1 in the Y direction. Port 20B is located on the +Y side of port 20A. Pipes 21A and 21B are disposed in region R1. Pipe 22A and pipe 22B are disposed in region R3 and region R4, respectively. Each of pipes 21A, 21B, 22A, and 22B is disposed to cool a peripheral edge portion (regions R1, R3 and R4) of power storage device B. Cooling pipe 23 is disposed in region R2. The plurality of coolers 22C are disposed in region R5.

A coolant supplied from port 20A to pipe 21A flows in pipe 21A to the -Y side. The coolant flowing from pipe 21A into pipe 22A flows in pipe 22A to the +X side toward cooling pipe 23 and also flows to the flow paths of the plurality of coolers 22C. The coolant flowing from pipe 22A into coolers 22C flows to the +Y side toward pipe 22B, while cooling power storage stacks S1 to S6. The coolant flowing from pipe 22A into cooling pipe 23 flows to the +Y side toward pipe 22B, while cooling battery circuit unit 30. The coolant flowing from coolers 22C or cooling pipe 23 into pipe 22B flows in pipe 22B to the -X side toward pipe 21B. Thereafter, the coolant flows in pipe 21B to the -Y side and flows out from port 20B.

As described above, cooling apparatus 20 is configured to be capable of cooling power storage device B having a high temperature. However, when power storage device B has a low temperature due to weather conditions, a place (e.g., a cold climate area) or the like, the coolant may raise the temperature of power storage device B. The coolant may be circulated by a pump (not shown) connected to ports 20A and 20B. Vehicle 1 (Fig. 1) may include an apparatus that adjusts a temperature of the coolant (such as a heat exchanger, a chiller or a heater). The coolant may be a liquid (e.g., water, oil or an antifreeze solution), or may be a gas (e.g., carbon dioxide gas).

In the present embodiment, wiring board 200 is disposed on the +Z side of bottom wall 101, and further, power storage stacks S1 to S6 are disposed on the +Z side of wiring board 200.

Fig. 5 is a diagram showing an exemplary configuration of the power storage cell constituting each of power storage stacks S1 to S6. Referring to Fig. 5, power storage cell 10 includes a case 10a and an electrode assembly 10b accommodated in case 10a. Case 10a is a prismatic case having a rectangular parallelepiped shape. Electrode assembly 10b may include one or more wound bodies (e.g., two wound bodies). For example, each of the wound bodies has such a structure that a positive electrode sheet and a negative electrode sheet are wound with a separator interposed therebetween. Each of the positive electrode sheet and the negative electrode sheet includes an electrode foil and an active material layer. Power storage cell 10 is, for example, a secondary battery such as a lithium ion battery, a nickel-metal hydride battery or a sodium ion battery. In the present embodiment, a liquid lithium ion battery is used as power storage cell 10. In addition to electrode assembly 10b, an electrolyte solution is accommodated in case 10a. The electrolyte solution includes, for example, an organic solvent and a lithium salt. Examples of the lithium ion battery include an LFP battery including lithium iron phosphate as a positive electrode active material, and a ternary battery including NMC (nickel manganese cobalt) as a positive electrode active material. A type of the secondary battery is not limited to the above and may, for example, be an all-solid-state secondary battery. Instead of the wound body, a stacked body (e.g., a stacked body in which a positive electrode sheet and a negative electrode sheet are stacked with a separator interposed therebetween) may be used.

Electrode terminals 11 and 12 and valve 13 are provided on a surface F10 of case 10a. Surface F10 corresponds to one end face of power storage cell 10 in a height direction. Valve 13 functions as an explosion-proof valve. Case 10a is basically maintained in a sealed state. However, when a pressure in case 10a exceeds a first reference value, valve 13 is opened to reduce the pressure in case 10a. Electrode terminal 11 and electrode terminal 12 are electrically connected to the positive electrode sheet and the negative electrode sheet of electrode assembly 10b to function as a positive electrode terminal and a negative electrode terminal, respectively. A portion of case 10a around electrode terminals 11 and 12 (e.g., a portion indicated by a broken line in Fig. 5) may be made of an insulating material and the other portion may be made of metal. However, the present disclosure is not limited to the above. Case 10a may be made of any material.

In the present embodiment, each of power storage stacks S1 to S6 shown in Fig. 3 is constituted by a plurality of power storage cells 10 arranged in the X direction. The power storage cells included in power storage stacks S1 to S6 have the same configuration (see Fig. 5). By forming power storage stacks S1 to S6 using common power storage cells 10, power storage device B can be manufactured more easily, which leads to a reduction in manufacturing cost. However, the present disclosure is not limited to the above. Each of the power storage stacks may include a plurality of types of power storage cells. The number of the power storage stacks can be changed as appropriate. The number of the power storage stacks may be one, or may be plural.

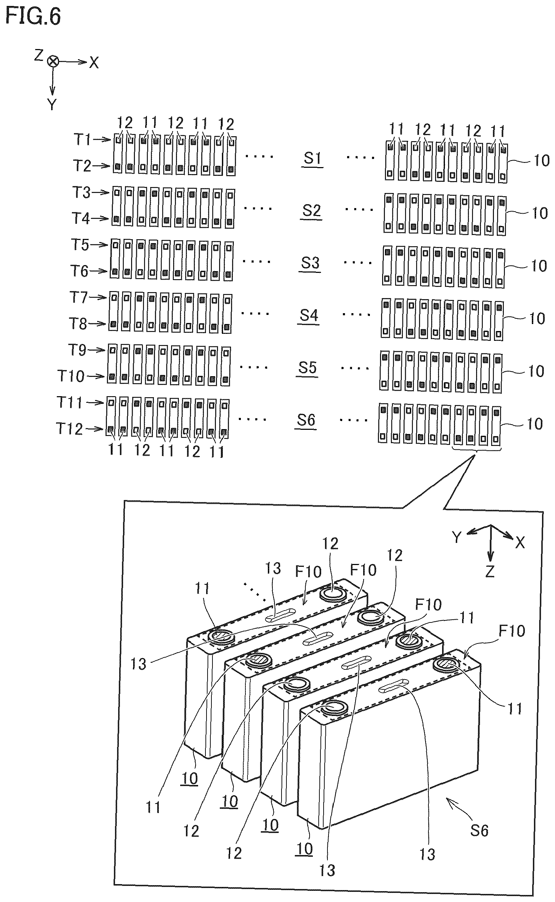

Fig. 6 is a diagram of power storage stacks S1 to S6 disposed in lower case 100, when viewed from the -Z side. Referring to Fig. 6, each of power storage stacks S1 to S6 includes N power storage cells 10. N represents the number of the power storage cells included in one power storage stack. N is, for example, equal to or more than 20 and equal to or less than 50. However, the present disclosure is not limited to the above. N may be equal to or more than 2 and less than 20, or may be more than 50. N can be arbitrarily set.

In each of the power storage stacks, power storage cell 10 is disposed in lower case 100 such that the height direction coincides with the Z direction, a width direction coincides with the X direction, and a length direction coincides with the Y direction. However, N power storage cells 10 are disposed such that a positional relationship between electrode terminal 11 (positive electrode terminal) and electrode terminal 12 (negative electrode terminal) is reversed for every two power storage cells 10. In each of the power storage stacks, two power storage cells 10 each including electrode terminal 11 facing the +Y side and two power storage cells 10 each including electrode terminal 11 facing the -Y side are alternately disposed in the X direction.

Power storage stack S1 has terminal rows T1 and T2 in the X direction. Power storage stack S2 has terminal rows T3 and T4 in the X direction. Power storage stack S3 has terminal rows T5 and T6 in the X direction. Power storage stack S4 has terminal rows T7 and T8 in the X direction. Power storage stack S5 has terminal rows T9 and T10 in the X direction. Power storage stack S6 has terminal rows T11 and T12 in the X direction. In each of the terminal rows, two electrode terminals 11 (positive electrode terminals) and two electrode terminals 12 (negative electrode terminals) are alternately disposed in the X direction. From the -Y side toward the +Y side, terminal rows T1, T2, T3, T4, T5, T6, T7, T8, T9, T10, T11, and T12 are disposed in this order.

Power storage stacks S1 to S6 include the same number of power storage cells and are disposed such that the positions of the power storage cells are aligned. A column (a column in the Y direction) is thus formed by six power storage cells 10 arranged in the Y direction. These columns are arranged in the X direction. "6×N" power storage cells 10 are disposed in a matrix having six columns in the Y direction and N rows in the X direction. Hereinafter, first power storage cell 10, second power storage cell 10, ..., N-th power storage cell 10 from the -X-side end in power storage stack S1 will be denoted as "cell 1(1)", "cell 1(2)", ..., "cell 1(N)", respectively. First power storage cell 10, second power storage cell 10, ..., N-th power storage cell 10 from the -X-side end in power storage stack S2 will be denoted as "cell 2(1)", "cell 2(2)", ..., "cell 2(N)", respectively. First power storage cell 10, second power storage cell 10, ..., N-th power storage cell 10 from the -X-side end in power storage stack S3 will be denoted as "cell 3(1)", "cell 3(2)", ..., "cell 3(N)", respectively. First power storage cell 10, second power storage cell 10, ..., N-th power storage cell 10 from the -X-side end in power storage stack S4 will be denoted as "cell 4(1)", "cell 4(2)", ..., "cell 4(N)", respectively. First power storage cell 10, second power storage cell 10, ..., N-th power storage cell 10 from the -X-side end in power storage stack S5 will be denoted as "cell 5(1)", "cell 5(2)", ..., "cell 5(N)", respectively. First power storage cell 10, second power storage cell 10, ..., N-th power storage cell 10 from the -X-side end in power storage stack S6 will be denoted as "cell 6(1)", "cell 6(2)", ..., "cell 6(N)", respectively.

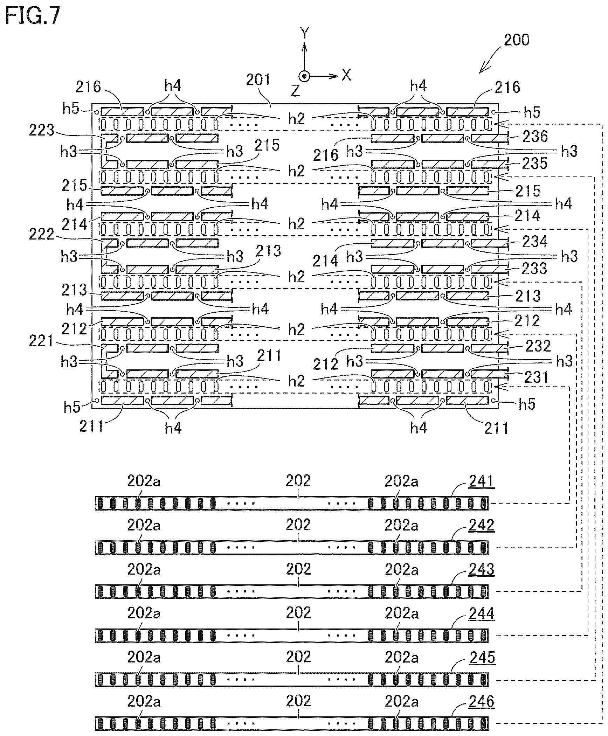

The power storage cells included in power storage stacks S1 to S6 shown in Fig. 6 are electrically connected to each other by a wiring pattern of wiring board 200. Wiring board 200 has, for example, a wiring pattern shown in Fig. 7. Fig. 7 is a diagram showing an exemplary configuration of wiring board 200.

Referring to Fig. 7, wiring board 200 is, for example, a panel having a wiring pattern formed thereon. Specifically, wiring board 200 includes a substrate 201 having a rectangular shape, a plurality of conductor members 211, a plurality of conductor members 212, a plurality of conductor members 213, a plurality of conductor members 214, a plurality of conductor members 215, a plurality of conductor members 216, conductor members 221 to 223, and conductor members 231 to 236. Substrate 201 is an insulating substrate having insulation properties. Substrate 201 is made of an insulating material. Substrate 201 may include a resin (e.g., a thermosetting resin).

Each of the plurality of conductor members 211 is connected to terminal row T1 or T2 shown in Fig. 6 to electrically connect the power storage cells included in power storage stack S1 to each other. Each of the plurality of conductor members 212 is connected to terminal row T3 or T4 shown in Fig. 6 to electrically connect the power storage cells included in power storage stack S2 to each other. Each of the plurality of conductor members 213 is connected to terminal row T5 or T6 shown in Fig. 6 to electrically connect the power storage cells included in power storage stack S3 to each other. Each of the plurality of conductor members 214 is connected to terminal row T7 or T8 shown in Fig. 6 to electrically connect the power storage cells included in power storage stack S4 to each other. Each of the plurality of conductor members 215 is connected to terminal row T9 or T10 shown in Fig. 6 to electrically connect the power storage cells included in power storage stack S5 to each other. Each of the plurality of conductor members 216 is connected to terminal row T11 or T12 shown in Fig. 6 to electrically connect the power storage cells included in power storage stack S6 to each other.

Conductor member 221 electrically connects power storage stacks S1 and S2 to each other. Conductor member 222 electrically connects power storage stacks S3 and S4 to each other. Conductor member 223 electrically connects power storage stacks S5 and S6 to each other. Conductor members 231, 232, 233, 234, 235, and 236 electrically connect power storage stacks S1, S2, S3, S4, S5, and S6 and battery circuit unit 30 to each other, respectively (see Fig. 3).

Each of conductor members 211 to 216, 221 to 223 and 231 to 236 is, for example, a plate-like member made of metal. Each of conductor members 221 to 223 may be a U-shaped plate-like member. Each of the conductor members may be a bus bar. Each of the conductor members may be made of any material and may have any shape.

In the example shown in Fig. 7, each of conductor members 211 to 216 connects the power storage cells in a corresponding power storage stack in parallel, two by two, to obtain parallel-connected bodies, and connects the obtained parallel-connected bodies in series. Each of the parallel-connected bodies consists of a plurality of power storage cells connected in parallel. Conductor member 221 electrically connects electrode terminal 11 of each of cell 1(1) and cell 1(2) and electrode terminal 12 of each of cell 2(1) and cell 2(2) to each other. Conductor member 222 electrically connects electrode terminal 11 of each of cell 3(1) and cell 3(2) and electrode terminal 12 of each of cell 4(1) and cell 4(2) to each other. Conductor member 223 electrically connects electrode terminal 11 of each of cell 5(1) and cell 5(2) and electrode terminal 12 of each of cell 6(1) and cell 6(2) to each other. One end of conductor member 231 is connected to electrode terminal 12 of each of cell 1(N-1) and cell 1(N), and the other end of conductor member 231 is connected to battery circuit unit 30. One end of conductor member 232 is connected to electrode terminal 11 of each of cell 2(N-1) and cell 2(N), and the other end of conductor member 232 is connected to battery circuit unit 30. One end of conductor member 233 is connected to electrode terminal 12 of each of cell 3(N-1) and cell 3(N), and the other end of conductor member 233 is connected to battery circuit unit 30. One end of conductor member 234 is connected to electrode terminal 11 of each of cell 4(N-1) and cell 4(N), and the other end of conductor member 234 is connected to battery circuit unit 30. One end of conductor member 235 is connected to electrode terminal 12 of each of cell 5(N-1) and cell 5(N), and the other end of conductor member 235 is connected to battery circuit unit 30. One end of conductor member 236 is connected to electrode terminal 11 of each of cell 6(N-1) and cell 6(N), and the other end of conductor member 236 is connected to battery circuit unit 30. Furthermore, battery circuit unit 30 shown in Fig. 3 electrically connects cell 2(N) and cell 3(N) to each other and electrically connects cell 4(N) and cell 5(N) to each other. Power storage stacks S1 to S6 are thus electrically connected to each other. In the pattern shown in Fig. 7, the plurality of parallel-connected bodies are connected in series.

The manner of connection of the plurality of power storage cells is not limited to the manner shown in Figs. 6 and 7 and can be changed as appropriate. For example, the number of the power storage cells connected in parallel may be three or more, instead of two. All of the power storage cells may be connected in series without forming the parallel-connected bodies.

In the present embodiment, the wiring pattern of wiring board 200 is formed by conductor members 211 to 216. Conductor members 211 to 216 are fixed to recesses formed in a surface (+Z-side surface) of substrate 201. A part of conductor members 211 to 216 are embedded in substrate 201. However, it is not essential to form the recesses (level difference) for conductor members 211 to 216 in the surface of substrate 201. Conductor members 211 to 216 may be joined to a flat surface of substrate 201.

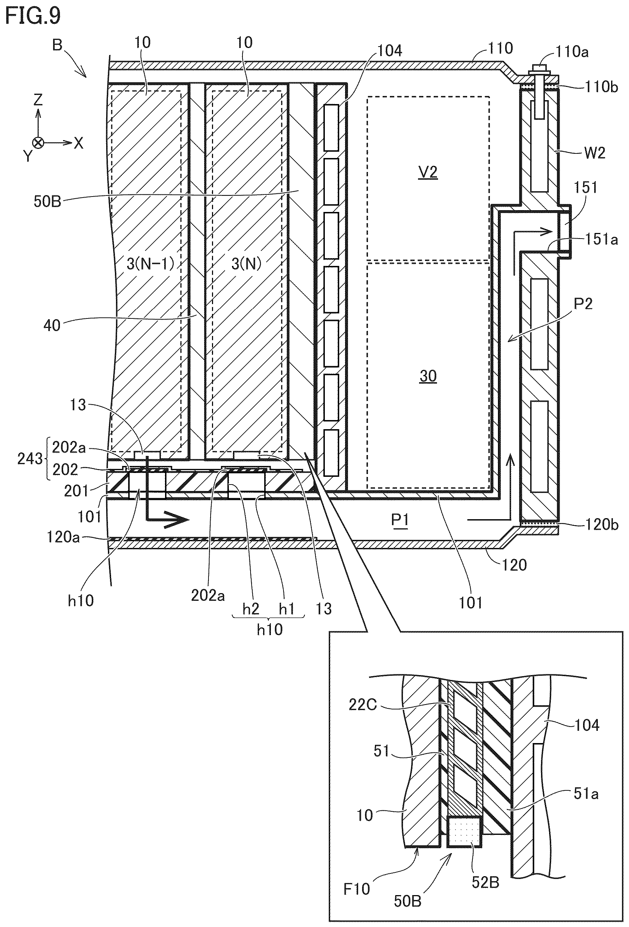

As shown in Fig. 7, openings h2 (more specifically, "6×N" openings h2) are formed in substrate 201. Each of openings h2 is located between the electrode terminals of each of the power storage cells included in power storage stacks S1 to S6, and more specifically below (-Z side) valve 13. Any of openings h2 faces valve 13 of power storage cell 10 in the Z direction. Each of openings h2 is, for example, a long hole extending through substrate 201. In an X-Y plane, a position of each of the plurality of openings h2 coincides with a position of each of the plurality of openings h1 shown in Fig. 4. Therefore, a through hole h10 (see Fig. 9 described below) extending through lower case 100 and substrate 201 is formed by opening h1 and opening h2. Opening h1 and opening h2 may have the same shape and dimension in the X-Y plane. Opening h2 is formed by, for example, punching.

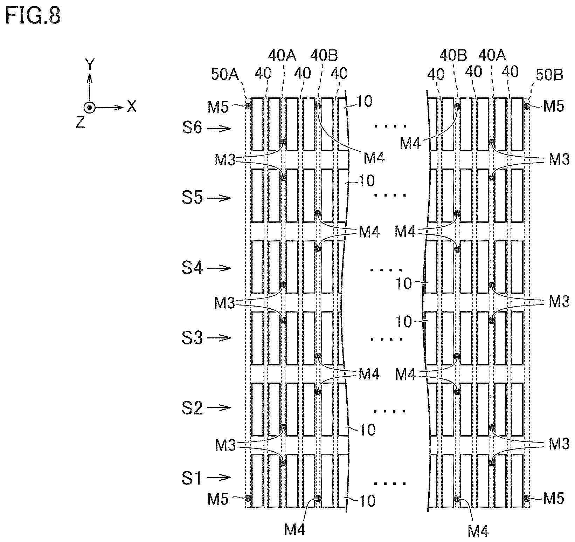

As shown in Fig. 7, a plurality of recesses h3, a plurality of recesses h4 and a plurality of recesses h5 are formed in substrate 201. Each of recesses h3, h4 and h5 is a hole that does not extend through substrate 201, and has a circular planar shape. As will be described in detail below, each of the recesses has a side wall having a tapered shape. A width (diameter) of each of the recesses becomes smaller toward the -Z side. In the present embodiment, recesses h3, h4 and h5 have the same shape and dimension. However, the present disclosure is not limited to the above. Recesses h3, h4 and h5 may have different shapes and dimensions. Each of recesses h3, h4 and h5 may be formed by, for example, machining or etching. Recesses h3, h4 and h5 are formed such that protrusions M3, M4 and M5 (see Fig. 8 and Figs. 11 to 13) described below fit thereinto, respectively. Widths (diameters) of recesses h3, h4 and h5 are set to be slightly larger than widths (diameters) of protrusions M3, M4 and M5 (e.g., widths of protrusions M3, M4 and M5 + positional deviation allowance), respectively.

In the present embodiment, each of the plurality of conductor members (any one of conductor members 211 to 216) provided for one power storage stack (any one of power storage stacks S1 to S6) connects the electrode terminals of four power storage cells 10 arranged in the X direction (see Fig. 3). The plurality of recesses h3 and the plurality of recesses h4 are both formed between the two conductor members (any one of conductor members 211 to 216) adjacent to each other in the X direction. Hereinafter, a column formed by six recesses h3 arranged in the Y direction will be referred to as "first recess column". A column formed by six recesses h4 arranged in the Y direction will be referred to as "second recess column". Substrate 201 has a plurality of first recess columns and a plurality of second recess columns.

The first recess column includes recess h3 located between the electrode terminals in terminal row T2 (hereinafter denoted as "first recess (1)"), recess h3 located between the electrode terminals in terminal row T3 (hereinafter denoted as "first recess (2)"), recess h3 located between the electrode terminals in terminal row T6 (hereinafter denoted as "first recess (3)"), recess h3 located between the electrode terminals in terminal row T7 (hereinafter denoted as "first recess (4)"), recess h3 located between the electrode terminals in terminal row T10 (hereinafter denoted as "first recess (5)"), and recess h3 located between the electrode terminals in terminal row T11 (hereinafter denoted as "first recess (6)").

The second recess column includes recess h4 located between the electrode terminals in terminal row T1 (hereinafter denoted as "second recess (1)"), recess h4 located between the electrode terminals in terminal row T4 (hereinafter denoted as "second recess (2)"), recess h4 located between the electrode terminals in terminal row T5 (hereinafter denoted as "second recess (3)"), recess h4 located between the electrode terminals in terminal row T8 (hereinafter denoted as "second recess (4)"), recess h4 located between the electrode terminals in terminal row T9 (hereinafter denoted as "second recess (5)"), and recess h4 located between the electrode terminals in terminal row T12 (hereinafter denoted as "second recess (6)").

Substrate 201 further has one recess h5 in each of the four corners (four corner portions). Hereinafter, recess h5 located in the -Y-side and -X-side corner will be referred to as "third recess (1)", recess h5 located in the +Y-side and -X-side corner will be referred to as "third recess (2)", recess h5 located in the -Y-side and +X-side corner will be referred to as "third recess (3)", and recess h5 located in the +Y-side and +X-side corner will be referred to as "third recess (4)".

Cover members 241 to 246 are provided on substrate 201. Thus, all of openings h2 formed in substrate 201 are covered by cover members 241 to 246. Each of cover members 241 to 246 includes a base member 202 elongated in the X direction and N lid portions 202a arranged in the X direction. Base member 202 may have an adhesive on one surface (adhesive surface). Base member 202 may be, for example, an adhesive tape such as a polypropylene (PP) tape. N lid portions 202a are formed on base member 202. In the present embodiment, lid portions 202a include mica. Mica is excellent in heat resistance and electrical insulation. N lid portions 202a in each of cover members 241 to 246 are formed to close N openings h2 located below a corresponding one of power storage stacks S1 to S6. Positions of lid portions 202a are determined in accordance with the positions of openings h2. The size of each of lid portions 202a is the same as or larger than that of each of openings h2. For example, N lid portions 202a may be formed on base member 202 by attaching N mica foils to the adhesive surface of base member 202. Alternatively, N lid portions 202a may be formed on base member 202 by forming N through holes in base member 202 and providing a mica foil in each of the through holes. Cover members 241 to 246 are, for example, attached to the surface (+Z-side surface) of substrate 201 with the adhesive surface of base member 202 interposed therebetween.

For example, after cover members 241 to 246 are attached to substrate 201, wiring board 200 is placed in lower case 100. Thereafter, power storage stacks S1 to S6 shown in Fig. 6 are rotated by 180° around an X axis as a rotation axis and placed on wiring board 200 with surface F10 of each power storage cell facing vertically downward, and power storage stacks S1 to S6 are connected to wiring board 200. Furthermore, battery circuit unit 30 is connected to wiring board 200 and cooling apparatus 20 is placed in lower case 100. As a result, the inside of lower case 100 has a state shown in Fig. 3. Cooler 22C, of cooling apparatus 20, may be placed in lower case 100 together with power storage stacks S1 to S6. Thereafter, the remaining portion of cooling apparatus 20 may be put into lower case 100 and each of pipes 22A and 22B may be connected to cooler 22C. Each of wiring board 200 and battery circuit unit 30 may be fixed to lower case 100 with an adhesive (e.g., a silicone adhesive).

Wiring board 200 is electrically connected to battery circuit unit 30 as shown in, for example, the lower part in Fig. 3. Battery circuit unit 30 includes a total positive terminal 31, a total negative terminal 32, a J/B 33, a fuse 34, and electric wires L1 to L4. Total positive terminal 31 is located at a positive-electrode-side end of the whole of power storage stacks S1 to S6 (all of the power storage cells). Total negative terminal 32 is located at a negative-electrode-side end of the whole of power storage stacks S1 to S6 (all of the power storage cells). Electric wire L1 electrically connects conductor member 232 and conductor member 233 to each other. Electric wire L2 electrically connects conductor member 234 and conductor member 235 to each other. Electric wire L2 is provided with fuse 34. Conductor member 236 is connected to total positive terminal 31. Electric wire L3 electrically connects total positive terminal 31 and J/B 33 to each other. Conductor member 231 is connected to total negative terminal 32. Electric wire L4 electrically connects total negative terminal 32 and J/B 33 to each other. J/B 33 accommodates various electric devices. J/B 33 may include at least one of a relay, a fuse, a resistance element, a current sensor, and a connector (e.g., a connector to a vehicle-mounted charger). Battery circuit unit 30 may further include at least one of a battery management system (BMS) and an electronic control unit (ECU). Various sensors (e.g., a temperature sensor and a voltage sensor) and a signal line that transmits values detected by the sensors to at least one of the BMS and the ECU may be further accommodated in region R5 (Fig. 4) of lower case 100. The voltage sensor may be provided for each parallel-connected body or for each power storage cell. The signal line may be formed by a flexible printed circuit (FPC).

Fig. 8 is a diagram showing a configuration of a power storage portion including power storage stacks S1 to S6. As shown in Fig. 8, intermediate members 40, 40A and 40B and termination members 50A and 50B, each of which extends in the Y direction throughout power storage stacks S1 to S6, are provided in region R5 of lower case 100 shown in Fig. 4. Any one of intermediate members 40, 40A and 40B is disposed between two power storage cells 10 adjacent to each other in the X direction. Termination member 50A is disposed outside power storage cell 10 located at the -X-side end. Termination member 50B is disposed outside power storage cell 10 located at the +X-side end. Termination member 50A, intermediate member 40, intermediate member 40A, intermediate member 40, intermediate member 40B, intermediate member 40, intermediate member 40A, ..., intermediate member 40A, intermediate member 40, intermediate member 40B, intermediate member 40, intermediate member 40A, intermediate member 40, and termination member 50B are disposed in this order from the -X side. Intermediate members 40 and intermediate members 40A or 40B are alternately disposed between termination member 50A and termination member 50B.

Intermediate member 40A is located above the first recess column (six recesses h3) shown in Fig. 7, i.e., the first recess (1) to the first recess (6). Intermediate member 40A has protrusion M3 protruding to the -Z side and fitting into the first recess (1) (hereinafter denoted as "first protrusion (1)"), protrusion M3 protruding to the -Z side and fitting into the first recess (2) (hereinafter denoted as "first protrusion (2)"), protrusion M3 protruding to the -Z side and fitting into the first recess (3) (hereinafter denoted as "first protrusion (3)"), protrusion M3 protruding to the -Z side and fitting into the first recess (4) (hereinafter denoted as "first protrusion (4)"), protrusion M3 protruding to the -Z side and fitting into the first recess (5) (hereinafter denoted as "first protrusion (5)"), and protrusion M3 protruding to the -Z side and fitting into the first recess (6) (hereinafter denoted as "first protrusion (6)").

Intermediate member 40B is located above the second recess column (six recesses h4) shown in Fig. 7, i.e., the second recess (1) to the second recess (6). Intermediate member 40B has protrusion M4 protruding to the -Z side and fitting into the second recess (1) (hereinafter denoted as "second protrusion (1)"), protrusion M4 protruding to the -Z side and fitting into the second recess (2) (hereinafter denoted as "second protrusion (2)"), protrusion M4 protruding to the -Z side and fitting into the second recess (3) (hereinafter denoted as "second protrusion (3)"), protrusion M4 protruding to the -Z side and fitting into the second recess (4) (hereinafter denoted as "second protrusion (4)"), protrusion M4 protruding to the -Z side and fitting into the second recess (5) (hereinafter denoted as "second protrusion (5)"), and protrusion M4 protruding to the -Z side and fitting into the second recess (6) (hereinafter denoted as "second protrusion (6)").

Termination member 50A is located above two recesses h5 on the -X side shown in Fig. 7, i.e., the third recess (1) and the third recess (2). Termination member 50A has protrusion M5 protruding to the -Z side and fitting into the third recess (1) (hereinafter denoted as "third protrusion (1)"), and protrusion M5 protruding to the -Z side and fitting into the third recess (2) (hereinafter denoted as "third protrusion (2)").

Termination member 50B is located above two recesses h5 on the +X side shown in Fig. 7, i.e., the third recess (3) and the third recess (4). Termination member 50B has protrusion M5 protruding to the -Z side and fitting into the third recess (3) (hereinafter denoted as "third protrusion (3)"), and protrusion M5 protruding to the -Z side and fitting into the third recess (4) (hereinafter denoted as "third protrusion (4)").

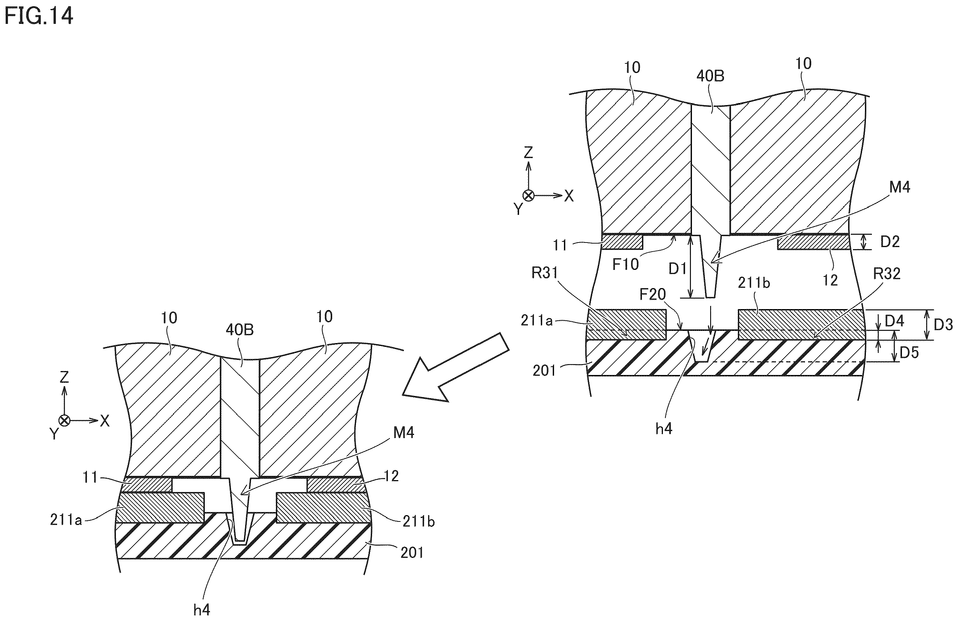

As will be described in detail below, the above-described protrusions are used for position adjustment (positioning) of power storage cells 10 (see Fig. 14). In substrate 201 shown in Fig. 7, no recess is formed below each of the plurality of intermediate members 40. A -Z-side end face of intermediate member 40 is formed to be flat. Intermediate member 40 does not have a protrusion for positioning.

Figs. 9, 10, 11, and 12 are end views of power storage device B taken along line IX-IX, line X-X, line XI-XI, and line XII-XII in Fig. 3, respectively.

Referring to Figs. 9 to 12, upper cover 110 is, for example, joined to an upper surface (+Z-side surface) of each of side walls W1 to W4 with an adhesive 110b interposed therebetween, and is further fastened thereto by a bolt 110a. Share panel 120 is, for example, joined to a lower surface (-Z-side surface) of each of side walls W1 to W4 with an adhesive 120b interposed therebetween. A gas discharge path P1 is formed between bottom wall 101 of lower case 100 and share panel 120. Each of side walls W1 to W4 is formed to be hollow. Gas discharge paths P2 and P3 are formed inside side walls W2 and W3, respectively. Although not shown, a gas discharge path is also formed inside side wall W4 in a manner equivalent to gas discharge path P3 of side wall W3. These gas discharge paths communicate with each other. Each of adhesives 110b and 120b may be an adhesive (e.g., a silicone adhesive) higher in thermal conductivity than air.

As shown in Fig. 9, a gas discharge hole 151a connecting to gas discharge valve 151 (Fig. 3) is formed in side wall W2. Gas discharge hole 151a extends through side wall W2. Although not shown, a gas discharge hole connecting to gas discharge valve 152 (Fig. 3) is also formed in side wall W2. These gas discharge holes communicate with gas discharge path P2.

As shown in Fig. 9, when the pressure in power storage cell 10 exceeds the first reference value, valve 13 is opened. Then, due to a pressure and heat of the gas discharged from inside power storage cell 10 through valve 13, a hole is made in lid portion 202a that faces valve 13. The gas discharged from power storage cell 10 flows into gas discharge path P1 through this hole. Each of gas discharge valves 151 and 152 shown in Fig. 3 is opened when a pressure in gas discharge path P2 exceeds a second reference value. The second reference value may be a pressure value lower than the first reference value. A check valve is, for example, used as each of gas discharge valves 151 and 152. When at least one of gas discharge valves 151 and 152 is opened, the gas in each of the gas discharge paths flows toward the opened gas discharge valve and is discharged outside power storage device B through this gas discharge valve. A thickness of lid portion 202a provided in wiring board 200 (Fig. 7) is set to a thickness that allows a hole to be made when valve 13 that lid portion 202a faces is opened (e.g., when valve 13 is opened with ignition).

A mica layer 120a (e.g., a mica foil) is provided on an inner (+Z side) surface of share panel 120. Mica layer 120a may be provided to overlap all of lid portions 202a in the X-Y plane. Mica layer 120a may be provided in entire region R5 shown in Fig. 4. Mica layer 120a protects share panel 120 from a substance (such as a gas, an electrolyte solution or debris) discharged from power storage cells 10 through lid portions 202a.

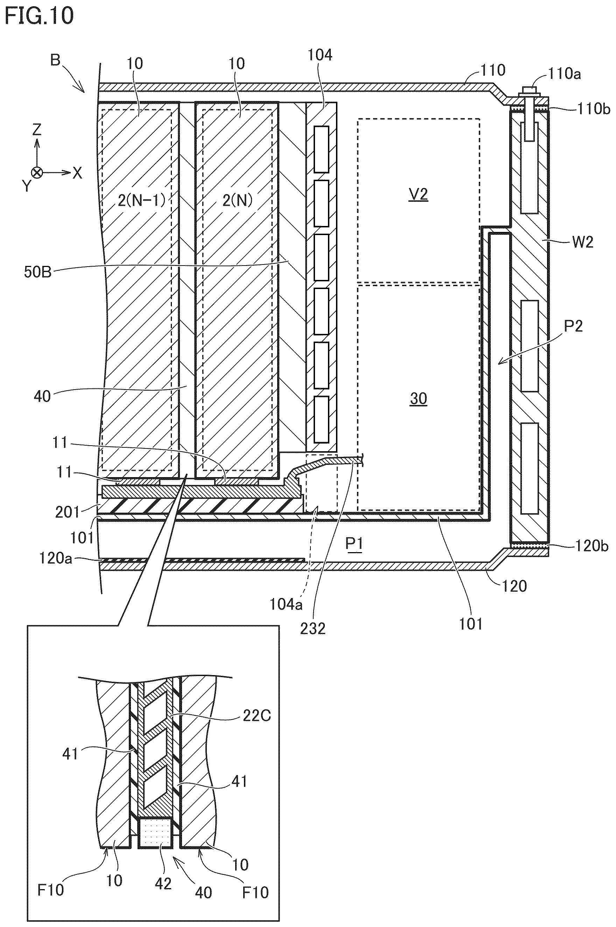

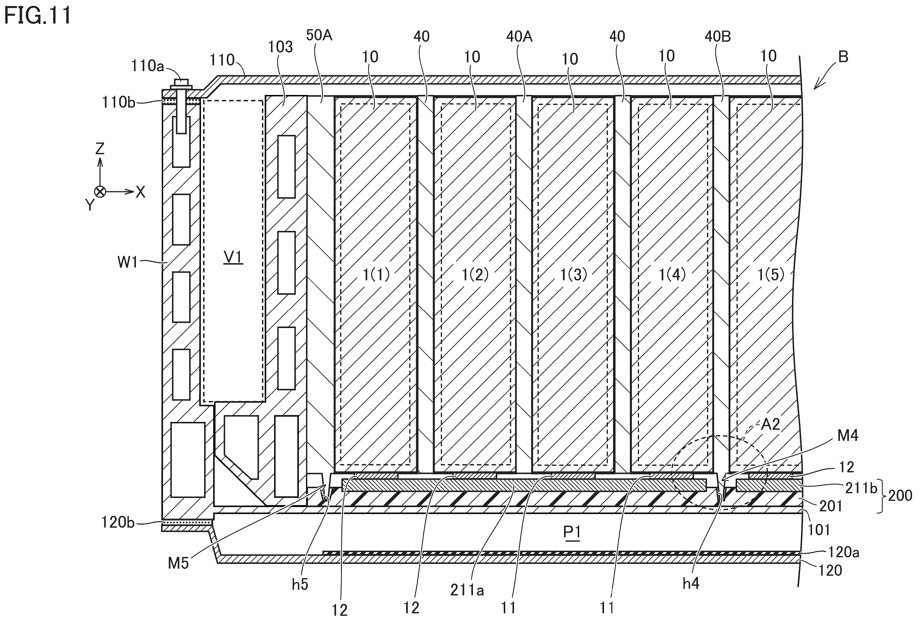

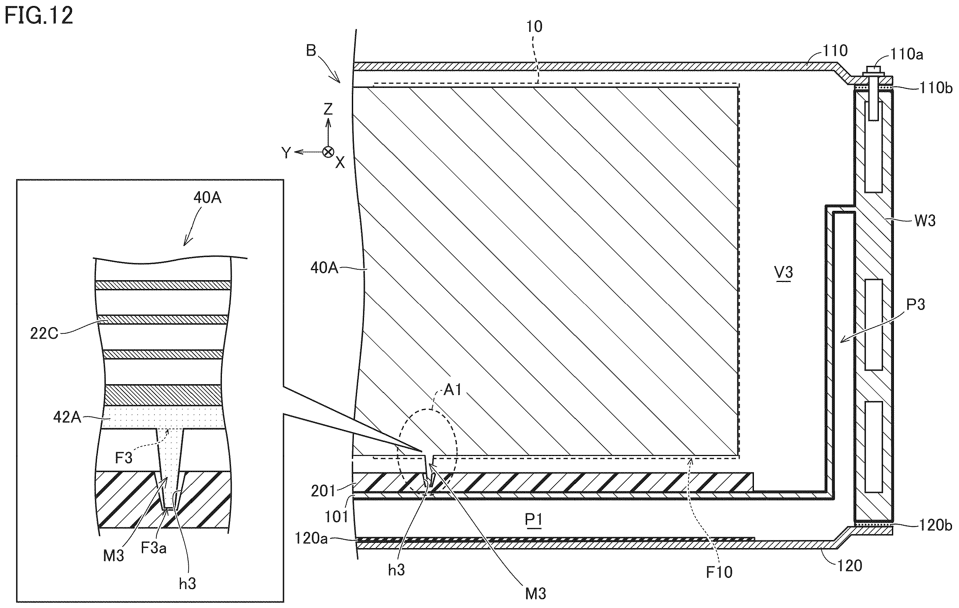

As shown in Figs. 9 and 10, there is a space V2 above battery circuit unit 30 in lower case 100. Although not shown, cooling pipe 23 shown in Fig. 3 is disposed in space V2. As shown in Fig. 11, there is a space V1 between partition wall 103 and side wall W1 in lower case 100. Although not shown, pipe 21A shown in Fig. 3 is disposed in space V1. As shown in Fig. 12, there is a space V3 between power storage cell 10 located at the -Y-side end and side wall W3 in lower case 100. Although not shown, pipe 22A shown in Fig. 3 is disposed in space V3. Spaces V1, V2 and V3 are located in regions R1, R2 and R3 (Fig. 4) in the X-Y plane, respectively.

As shown in Fig. 10, intermediate member 40 includes cooler 22C (Fig. 3), two insulating pads 41, and two impact absorbing members located at both ends of cooler 22C in the Z direction (only impact absorbing member 42 on the -Z side is shown). In intermediate member 40 shown in Fig. 10, one insulating pad 41 is located between cooler 22C and the cell 2(N-1), and the other insulating pad 41 is located between cooler 22C and the cell 2(N). Impact absorbing member 42 suppresses transmission of an impact to cooler 22C. A tip surface (-Z-side end face of intermediate member 40) of impact absorbing member 42 on the -Z side is disposed to be flush with (at the same height as) surface F10 of each power storage cell included in the power storage stack (e.g., power storage stack S2) corresponding to this intermediate member. Intermediate member 40 does not protrude from surface F10 to the -Z side. Although Fig. 10 only shows a -Z-side end of intermediate member 40, a +Z-side end also basically has the same structure.

As shown in Fig. 9, termination member 50B includes cooler 22C (Fig. 3), an insulating pad 51, an insulating pad 51a, and two impact absorbing members located at both ends of cooler 22C in the Z direction (only impact absorbing member 52B on the -Z side is shown). Each of insulating pads 51 and 51a may be a resin film. Cooler 22C sandwiched between insulating pads 51 and 51a is disposed between power storage cell 10 (e.g., the cell 3(N)) and partition wall 104. Insulating pad 51a on the outer side (partition wall 104 side) is formed to be thicker than insulating pad 51 on the inner side (power storage cell side). This makes it less likely to transmit an impact from the outside to the power storage portion (power storage stacks S1 to S6). Impact absorbing member 52B suppresses transmission of an impact to cooler 22C. Although not shown in Fig. 9, one (specifically, impact absorbing member 52B on the -Z side) of the two impact absorbing members has the above-described third protrusion (3) and third protrusion (4).

Termination member 50A and termination member 50B basically have the same structure. However, as shown in Fig. 10, an opening 104a through which conductor member 232 extends is formed in partition wall 104. Conductor member 232 is connected to battery circuit unit 30 through opening 104a. Although not shown, openings through which conductor members 231, 233, 234, 235, and 236 shown in Fig. 3 extend are also formed in partition wall 104. In the present embodiment, in order to more easily connect conductor members 231 to 236 to battery circuit unit 30, a lower part of termination member 50B is processed to be adapted to the openings of partition wall 104. Termination members 50A and 50B may apply restraining force to power storage stacks S1 to S6 from both sides in the X direction.

The protrusion for positioning formed on each of intermediate members 40A and 40B and termination members 50A and 50B will be described below with reference to Figs. 11 to 14. Hereinafter, of the plurality of conductor members 211 shown in Fig. 3, conductor member 211 connected to the cell 1(1) to the cell 1(4) will be referred to as "conductor member 211a" and conductor member 211 connected to the cell 1(5) to the cell 1(8) will be referred to as "conductor member 211b".

As shown in Fig. 11, power storage device B includes the cell 1(4) having electrode terminal 11 (first electrode terminal), the cell 1(5) having electrode terminal 12 (second electrode terminal), and wiring board 200. Power storage device B further includes the component (more specifically, intermediate member 40B) located between the cell 1(4) and the cell 1(5). Wiring board 200 has substrate 201, conductor member 211a (first conductor member) connected to electrode terminal 11 of the cell 1(4), and conductor member 211b (second conductor member) connected to electrode terminal 12 of the cell 1(5). The cell 1(4) and the cell 1(5) correspond to examples of "first power storage cell" and "second power storage cell" according to the present disclosure, respectively.

Recess h4 is formed in substrate 201. Recess h4 shown in Fig. 11 corresponds to the second recess (1). Intermediate member 40B has protrusion M4 protruding to the wiring board 200 side and fitting into recess h4. Protrusion M4 shown in Fig. 11 corresponds to the second protrusion (1). Protrusion M4 protrudes farther to the wiring board 200 side than each of electrode terminal 11 of the cell 1(4) and electrode terminal 12 of the cell 1(5). According to such a configuration, when each power storage cell is mounted on wiring board 200, protrusion M4 more easily fits into recess h4 before the electrode terminals of each power storage cell hit against wiring board 200. This makes it easier to perform position adjustment by protrusion M4 and recess h4. Electrode terminal 11 of the cell 1(4) and electrode terminal 12 of the cell 1(5) are connected to conductor member 211a and conductor member 211b, respectively, with electrode terminal 11 of the cell 1(4) and electrode terminal 12 of the cell 1(5) facing vertically downward. In the present embodiment, all of the power storage cells accommodated in lower case 100 are mounted on wiring board 200, with all of the power storage cells facing vertically downward. According to such a configuration, protrusion M4 can be fitted into recess h4 by gravity. This makes position adjustment of each power storage cell easier.

Recess h5 is further formed in substrate 201. Recess h5 shown in Fig. 11 corresponds to the third recess (1). Termination member 50A has protrusion M5 protruding to the wiring board 200 side and fitting into recess h5. Protrusion M5 shown in Fig. 11 corresponds to the third protrusion (1). Protrusion M5 protrudes farther to the wiring board 200 side than the electrode terminals of all of the power storage cells accommodated in lower case 100. According to such a configuration, when each power storage cell is mounted on wiring board 200, with each power storage cell sandwiched between termination members 50A and 50B, protrusion M5 more easily fits into recess h5 before the electrode terminals of each power storage cell hit against wiring board 200. This makes it easier to perform position adjustment by protrusion M5 and recess h5.

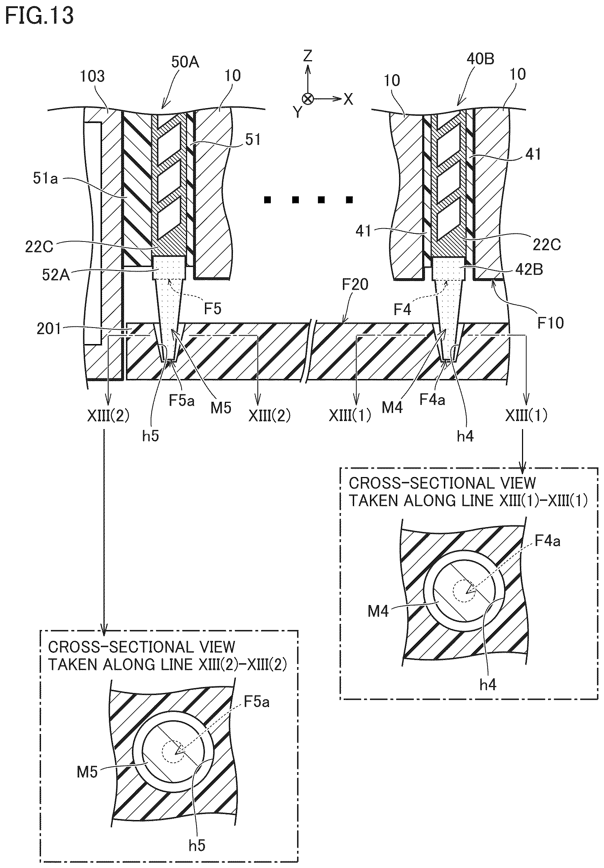

Fig. 13 is a diagram for illustrating details of protrusions M4 and M5 shown in Fig. 11. Referring to Fig. 13, recesses h4 and h5 are formed in surface F20 (+Z-side surface) of substrate 201.

Intermediate member 40B includes cooler 22C (Fig. 3), two insulating pads 41, and two impact absorbing members located at both ends of cooler 22C in the Z direction (only impact absorbing member 42B on the -Z side is shown). Each of two insulating pads 41 may be a resin film. In intermediate member 40B shown in Fig. 11, one insulating pad 41 is located between cooler 22C and the cell 1(4), and the other insulating pad 41 is located between cooler 22C and the cell 1(5). Impact absorbing member 42B suppresses transmission of an impact to cooler 22C. Impact absorbing member 42B may be made of an insulating material (e.g., resin). Impact absorbing member 42B may be joined to cooler 22C by an adhesive or welding. In the present embodiment, impact absorbing member 42B provided on the -Z side of cooler 22C has protrusion M4. As shown in Fig. 8, intermediate member 40B has protrusion M4 at a position facing the second recess column of substrate 201 (see Fig. 7). On the other hand, a portion where protrusion M4 is not formed (surface F4 in Fig. 13), of a -Z-side end face of intermediate member 40B, is disposed to be flush with (at the same height as) surface F10 of each power storage cell. A +Z-side end of intermediate member 40B may have the same structure as that of the +Z-side end of intermediate member 40.

A side surface of impact absorbing member 42B has a tapered shape. Specifically, impact absorbing member 42B becomes thinner toward a tip surface (surface F4a in Fig. 13) thereof. A width of a tip portion (width of surface F4a) of impact absorbing member 42B is smaller than a width of a base portion (width of surface F4) of impact absorbing member 42B. As shown in Fig. 13, in power storage device B, a part of protrusion M4 of impact absorbing member 42B is located inside recess h4. Recess h4 also becomes smaller in diameter toward a bottom surface to correspond to protrusion M4. As shown in a cross-sectional view taken along line XIII(1)-XIII(1), each of protrusion M4 and recess h4 has a circular planar shape. A width (diameter) of recess h4 is greater than a width (diameter) of protrusion M4. However, a different in diameter therebetween is set to be small so that positional deviation of power storage cell 10 is suppressed.

Termination member 50A includes cooler 22C (Fig. 3), insulating pad 51, insulating pad 51a, and two impact absorbing members located at both ends of cooler 22C in the Z direction (only impact absorbing member 52A on the -Z side is shown). Each of insulating pads 51 and 51a may be a resin film. Cooler 22C sandwiched between insulating pads 51 and 51a is disposed between power storage cell 10 (e.g., the cell 1(1)) and partition wall 103. Insulating pad 51a on the outer side (partition wall 103 side) is formed to be thicker than insulating pad 51 on the inner side (power storage cell side). This makes it less likely to transmit an impact from the outside to the power storage portion (power storage stacks S1 to S6). Impact absorbing member 52A suppresses transmission of an impact to cooler 22C. Impact absorbing member 52A may be made of an insulating material (e.g., resin). Impact absorbing member 52A may be joined to cooler 22C by an adhesive or welding. In the present embodiment, impact absorbing member 52A provided on the -Z side of cooler 22C has protrusion M5. As shown in Fig. 8, termination member 50A has protrusion M5 at a position facing two -X-side recesses h5 formed in substrate 201 (see Fig. 7). On the other hand, a portion where protrusion M5 is not formed (surface F5 in Fig. 13), of a -Z-side end face of termination member 50A, is disposed to be flush with (at the same height as) surface F10 of each power storage cell.

A side surface of impact absorbing member 52A has a tapered shape. Specifically, impact absorbing member 52A becomes thinner toward a tip surface (surface F5a in Fig. 13) thereof. A width of a tip portion (width of surface F5a) of impact absorbing member 52A is smaller than a width of a base portion (width of surface F5) of impact absorbing member 52A. As shown in Fig. 13, in power storage device B, a part of protrusion M5 of impact absorbing member 52A is located inside recess h5. Recess h5 also becomes smaller in diameter toward a bottom surface to correspond to protrusion M5. As shown in a cross-sectional view taken along line XIII(2)-XIII(2), each of protrusion M5 and recess h5 has a circular planar shape. A width (diameter) of recess h5 is greater than a width (diameter) of protrusion M5. However, a difference in diameter therebetween is set to be small so that positional deviation of power storage cell 10 is suppressed.

Next, a structure of intermediate member 40A will be described with reference to Fig. 12. A left-sided enlarged view in Fig. 12 is an enlarged view of region A1.

Referring to Fig. 12, intermediate member 40A basically has the same structure as that of intermediate member 40B. However, intermediate member 40A has protrusion M3 instead of protrusion M4. In the present embodiment, an impact absorbing member 42A provided on the -Z side of cooler 22C in intermediate member 40A has protrusion M3. As shown in Fig. 8, intermediate member 40A has protrusion M3 at a position facing the first recess column of substrate 201 (see Fig. 7). On the other hand, a portion where protrusion M3 is not formed (surface F3 in Fig. 12), of a -Z-side end face of intermediate member 40A, is disposed to be flush with (at the same height as) surface F10 of each power storage cell. A side surface of impact absorbing member 42A has a tapered shape. Specifically, impact absorbing member 42A becomes thinner toward a tip surface (surface F3a in Fig. 12) thereof. Recess h3 also becomes smaller in diameter toward a bottom surface to correspond to protrusion M3. Although not shown in Fig. 12, intermediate member 40A also has two insulating pads, similarly to intermediate member 40B.

Fig. 14 is an enlarged view of region A2 in Fig. 11. Referring to Fig. 14, conductor member 211a and conductor member 211b are disposed on bottom surfaces of a recess R31 (first recess) and a recess R32 (second recess) formed in surface F20 of substrate 201, respectively. Recesses R31 and R32 have the same depth D4. Although not shown in Fig. 14, the other conductor members provided on substrate 201 are also disposed on the bottom surfaces of the recesses having depth D4 in the present embodiment. Depth D4 is smaller than a depth D5 of recess h4. All of the conductor members (including conductor members 211a and 211b) provided on substrate 201 are formed to have the same thickness D3. Depth D4 is smaller than thickness D3. In the present embodiment, electrode terminals 11 and 12 of all of the power storage cells accommodated in lower case 100 have the same thickness D2.

In the present embodiment, a length D1 of protrusion M4 (an amount of protrusion from surface F10 of each power storage cell to a tip surface of protrusion M4) is set to be longer than "thickness D2 + thickness D3 - depth D4" and shorter than "thickness D2 + thickness D3 - depth D4 + depth DS". Length D1 of protrusion M4 may be set to be longer than "thickness D2 + thickness D3 - depth D4 + (depth D5 × 1/3)". By setting length D1 to such a dimension, position adjustment by protrusion M4 and recess h4 is more easily performed before the electrode terminals of each power storage cell hit against the conductor members of wiring board 200. As depth D4 becomes greater, it becomes easier to shorten length D1. In the present embodiment, not only for a combination of protrusion M4 and recess h4 shown in Fig. 14 but also for a combination of protrusion M3 and recess h3 and a combination of protrusion M5 and recess h5, the dimension is set to satisfy the above-described relationship. However, the dimension of each component of power storage device B can be changed as appropriate.

Power storage stacks S1 to S6 may be mounted on wiring board 200, with power storage stacks S1 to S6 restrained by termination members 50A and 50B. In order to mount each power storage cell on wiring board 200, each power storage cell is brought closer to wiring board 200 (-Z side), for example. In this case, when the tip surface of protrusion M4 hits against the tapered side wall of recess h4, the position of each power storage cell is adjusted to the center side of recess h4 by the side wall of recess h4. When each power storage cell is mounted, position adjustment is performed not only by the combination of protrusion M4 and recess h4 shown in Fig. 14 but also by the combination of protrusion M3 and recess h3 and the combination of protrusion M5 and recess h5 shown in Figs. 7 and 8. A value obtained by subtracting depth D4 from a total value of thickness D2 and thickness D3 in Fig. 14 corresponds to a spacing between surface F10 and surface F20 when the electrode terminal of each power storage cell comes into contact with the conductor member of wiring board 200. When each power storage cell is brought closer to wiring board 200 until the electrode terminal of each power storage cell comes into contact with the conductor member of wiring board 200, protrusions M3, M4 and M5 are inserted into recesses h3, h4 and h5, respectively. The insertion of the protrusion between the power storage cells into the recess of wiring board 200 makes it less likely to cause positional deviation of each power storage cell after each power storage cell is mounted. In addition, the presence of protrusion M4 having insulation properties between conductor members 211a and 211b adjacent to each other in the X direction results in an increase in electrical insulation between conductor members 211a and 211b.

The electrode terminals of power storage cells 10 and the conductor members of wiring board 200 may be joined by caulking, thermal compression bonding, or welding (e.g., laser welding). The electrode terminals and the conductor members may be fastened to each other. A recess (counterbore) that accommodates a bolt head and/or a washer may be formed in a rear surface (-Z-side surface) of substrate 201.

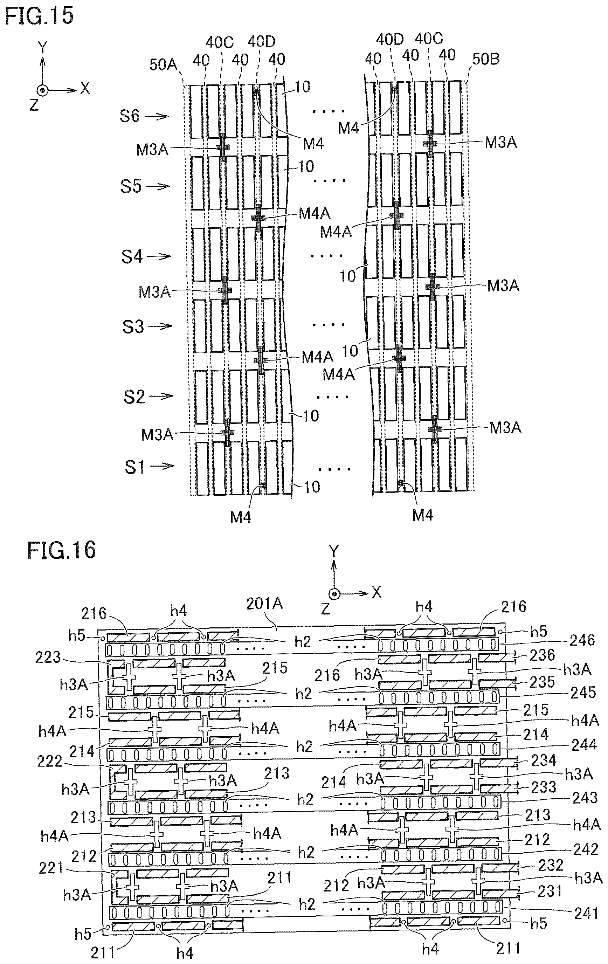

In the above-described embodiment, each of the protrusions for positioning is formed to have a truncated cone shape. Each of the protrusions functions as a positioning pin. However, the shape and dimension of each of the protrusions and recesses for positioning can be changed as appropriate. Fig. 15 is a diagram showing a first modification of the protrusion for positioning shown in Fig. 8. Fig. 16 is a diagram showing a recess for positioning corresponding to the protrusion according to the first modification shown in Fig. 15.

A power storage device shown in Figs. 15 and 16 includes intermediate members 40C and 40D instead of intermediate members 40A and 40B shown in Fig. 8. Intermediate member 40C includes a protrusion M3A located between power storage stacks S1 and S2, a protrusion M3A located between power storage stacks S3 and S4, and a protrusion M3A located between power storage stacks S5 and S6. Intermediate member 40D includes the second protrusion (1), a protrusion M4A located between power storage stacks S2 and S3, a protrusion M4A located between power storage stacks S4 and S5, and the second protrusion (6). Each of protrusions M3A and protrusions M4A has a cross-shaped planar shape. More specifically, each of protrusions M3A and protrusions M4A has a portion extending in the X direction and a portion extending in the Y direction, and these portions intersect with each other between the power storage stacks.

Instead of the first recesses (1) to (6) shown in Fig. 7, a substrate 201A shown in Fig. 16 has a plurality of recesses h3A into which the plurality of protrusions M3A of intermediate member 40C shown in Fig. 15 fit, respectively. In addition, instead of the second recesses (2) to (5) shown in Fig. 7, substrate 201A has a plurality of recesses h4A into which the plurality of protrusions M4A of intermediate member 40D shown in Fig. 15 fit, respectively. Each of recesses h3A and recesses h4A has a cross-shaped planar shape.

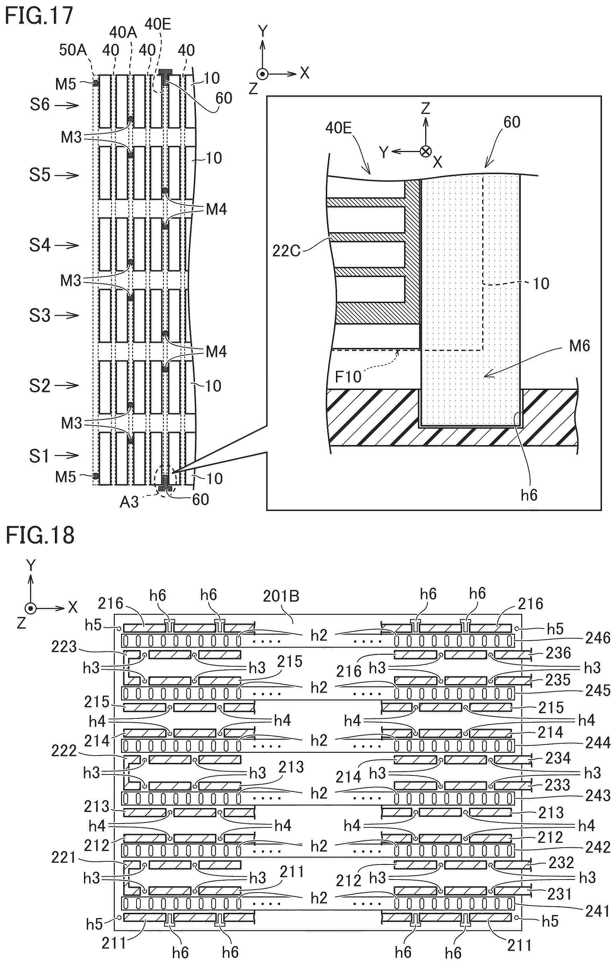

Fig. 17 is a diagram showing a second modification of the protrusion for positioning shown in Fig. 8. The right-sided figure in Fig. 17 is a cross-sectional view of an insulating member 60 in region A3. Fig. 18 is a diagram showing a recess for positioning corresponding to the protrusion according to the second modification shown in Fig. 17.

A power storage device according to the modification shown in Figs. 17 and 18 includes an intermediate member 40E instead of intermediate member 40B shown in Fig. 8. Intermediate member 40E is formed by removing both ends of intermediate member 40B in the Y direction to shorten the length. Insulating member 60 having a T-shaped planar shape is additionally disposed in a space provided at each of both ends of intermediate member 40E in the Y direction. Insulating member 60 has a protrusion M6 protruding farther to the -Z side than surface F10. Insulating member 60 has a portion joined to both of two power storage cells 10 adjacent to each other in the X direction between these two power storage cells 10, a portion joined to an outer surface of one of these two power storage cells 10, and a portion joined to an outer surface of the other of these two power storage cells 10.

Instead of the second recesses (1) and (6) shown in Fig. 7, a substrate 201B shown in Fig. 18 has a plurality of recesses h6 into which the plurality of protrusions M6 shown in Fig. 17 fit, respectively. Each of recesses h6 has a T-shaped planar shape.

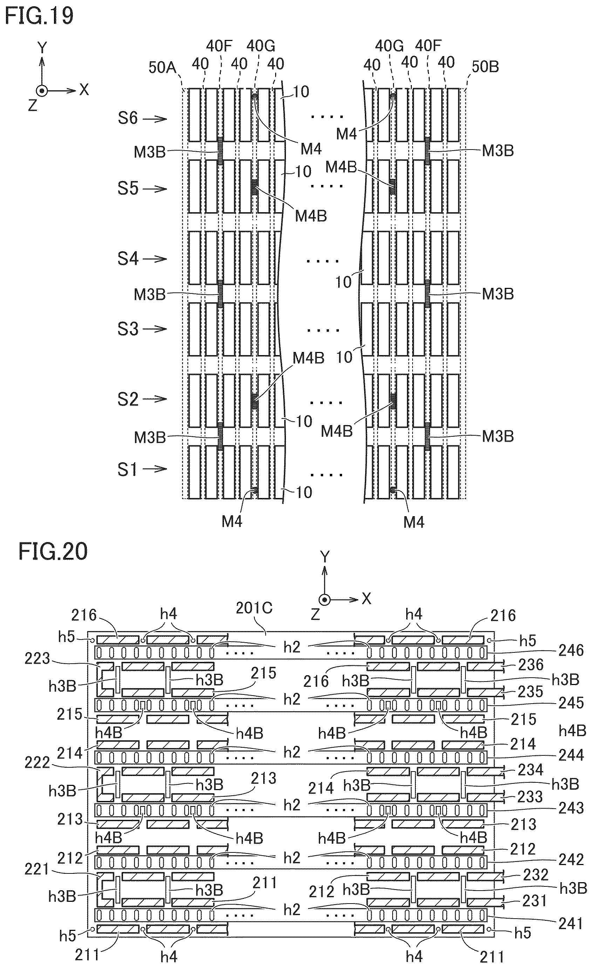

Fig. 19 is a diagram showing a third modification of the protrusion for positioning shown in Fig. 8. Fig. 20 is a diagram showing a recess for positioning corresponding to the protrusion according to the third modification shown in Fig. 19.

A power storage device according to the modification shown in Figs. 19 and 20 includes intermediate members 40F and 40G instead of intermediate members 40A and 40B shown in Fig. 8. Intermediate member 40F includes a protrusion M3B located between power storage stacks S1 and S2, a protrusion M3B located between power storage stacks S3 and S4, and a protrusion M3B located between power storage stacks S5 and S6. Intermediate member 40G includes the second protrusion (1), a protrusion M4B located between two valves 13 adjacent to each other in the X direction in power storage stack S2, a protrusion M4B located between two valves 13 adjacent to each other in the X direction in power storage stack S5, and the second protrusion (6). Each of protrusions M3B and protrusions M4B has a rectangular planar shape.

Instead of the first recesses (1) to (6) shown in Fig. 7, a substrate 201C shown in Fig. 20 has a plurality of recesses h3B into which the plurality of protrusions M3B of intermediate member 40F shown in Fig. 19 fit, respectively. In addition, instead of the second recesses (2) to (5) shown in Fig. 7, substrate 201C has a plurality of recesses h4B into which the plurality of protrusions M4B of intermediate member 40G shown in Fig. 19 fit, respectively. Each of recesses h3B and recesses h4B has a rectangular planar shape.

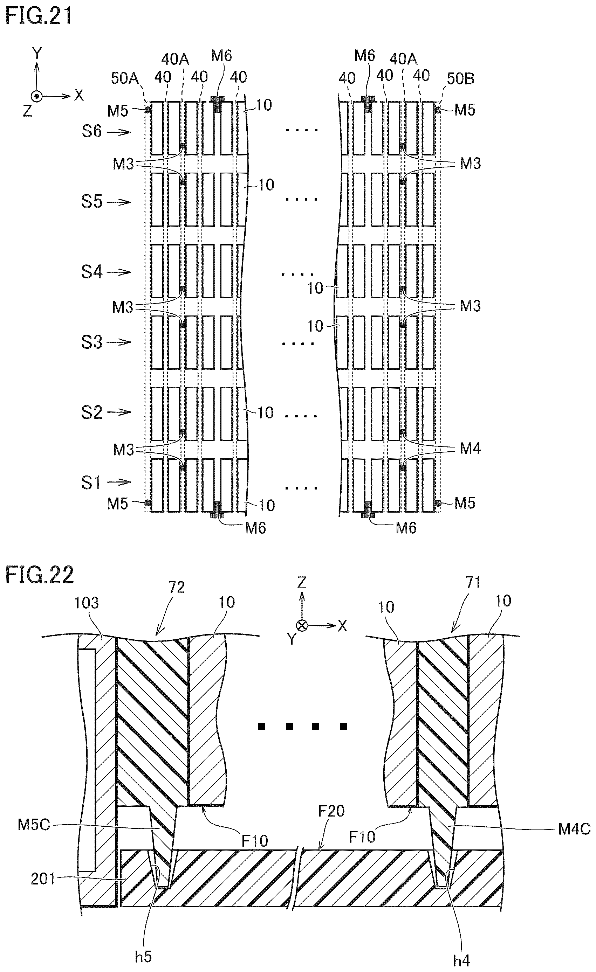

It is not essential to provide the coolers in all of the spaces between the power storage cells. Fig. 21 is a diagram showing a modification of the configuration shown in Fig. 17. As shown in Fig. 21, intermediate member 40E may be omitted from the configuration shown in Fig. 17.

The configuration of each of the intermediate members and the termination members shown in Figs. 8 to 10, 12 and 13 can be changed as appropriate.

Fig. 22 is a diagram showing a first modification of the configuration shown in Fig. 13. As shown in Fig. 22, in this modification, the whole of an intermediate member 71 located between the power storage cells is made of an insulating material. Intermediate member 71 has a protrusion M4C fitting into recess h4 formed in surface F20 of substrate 201. In addition, the whole of a termination member 72 located between the partition wall and the power storage cell is made of an insulating material. Termination member 72 has a protrusion M5C fitting into recess h5 formed in surface F20 of substrate 201.

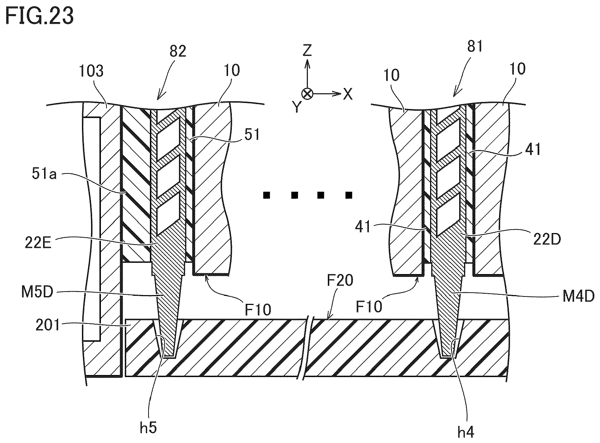

Fig. 23 is a diagram showing a second modification of the configuration shown in Fig. 13. An intermediate member 81 shown in Fig. 23 has the same configuration as that of intermediate member 40B except that intermediate member 81 includes a cooler 22D instead of cooler 22C and impact absorbing member 42B. Cooler 22D has the same function as that of cooler 22C and has a protrusion M4D fitting into recess h4 formed in surface F20 of substrate 201. In addition, a termination member 82 shown in Fig. 23 has the same configuration as that of termination member 50A except that termination member 82 includes a cooler 22E instead of cooler 22C and impact absorbing member 52A. Cooler 22E has the same function as that of cooler 22C and has a protrusion MSD fitting into recess h5 formed in surface F20 of substrate 201. Each of coolers 22D and 22E may be made of metal.

In the above-described embodiment, the openings through which conductor members 231 to 236 extend are formed in partition wall 104 (see Fig. 10). However, the present disclosure is not limited to the above. Partition wall 104 may be replaced with a plurality of divided partition plates. Conductor members 231 to 236 may pass, in the X direction, between the partition plates arranged in the Y direction. Alternatively, an electric wire (e.g., a cable) connecting to wiring board 200 may extend above partition wall 104 shown in Fig. 3 and be connected to battery circuit unit 30. A device cooler (including cooling pipe 23) that cools battery circuit unit 30 may be provided below battery circuit unit 30. It is not essential to dispose, between the power storage cells adjacent to each other, a cell cooler (e.g., cooler 22C) that cools the power storage cells. The cell cooler may be provided above the power storage cells. The cell cooler may be provided to cover the upper surfaces of all of the power storage cells. Partition walls 103 and 104 shown in Fig. 3 are not essential configurations. At least one of partition walls 103 and 104 may be omitted. At least one of the two termination members (a pair of termination members) may be omitted.

Various features relating to the above-described power storage device (features described in the embodiment and the modifications) may be applied in any combination.

The purpose of use of the power storage device is not particularly limited. The power storage device may be used in a vehicle other than a car (an electric motorcycle, an electric wheelchair, a railway vehicle, a ship, an airplane, an electric vertical takeoff and landing aircraft (eVTOL), an amphibious aircraft, or the like), a mobile machine (an agricultural machine, a construction machine, or the like), an unmanned movable body (an automated guided vehicle (AGV), a mobile robot, a drone, a robot cleaner, a space probe, or the like), a wearable robot, a stationary robot (e.g., an industrial robot), or a building (a house, a factory, or the like).

Although the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A power storage device (B) comprising:
a first power storage cell (10, 1(4)) having a first electrode terminal (11);
a second power storage cell (10, 1(5)) having a second electrode terminal (12); and
a wiring board (200), wherein
the wiring board includes:
a substrate (201);
a first conductor member (211a) connected to the first electrode terminal; and
a second conductor member (211b) connected to the second electrode terminal,
the power storage device further comprises a component (40A, 40B, 40C, 40D, 40E, 40F, 40G, 71, 22D) located between the first power storage cell and the second power storage cell,
a recess (h3, h3A, h3B, h4, h4A, h4B, h4C, h4D, h6) is formed in the substrate, and
the component has a protrusion (M3, M3A, M3B, M4, M4A, M4B, M4C, M4D, M6) protruding to the wiring board side and fitting into the recess.

2. The power storage device according to claim 1, wherein
the protrusion (M3, M4) protrudes farther to the wiring board (200) side than each of the first electrode terminal (11) and the second electrode terminal (12).

3. The power storage device according to claim 2, wherein
the first conductor member (211a) and the second conductor member (211b) are disposed on bottom surfaces of a first recess (R31) and a second recess (R32) formed in the substrate (201), respectively.

4. The power storage device according to any one of claims 1 to 3, wherein
a side wall of the recess (h3, h4) has a tapered shape.

5. The power storage device according to any one of claims 1 to 3, wherein
each of the recess (h3, h3B, h4, h4B) and the protrusion (M3, M3B, M4, M4B) has a circular or rectangular planar shape.

6. The power storage device according to any one of claims 1 to 3, wherein
each of the recess (h3A, h4A, h6) and the protrusion (M3A, M4A, M6) has a cross-shaped or T-shaped planar shape.

7. The power storage device according to any one of claims 1 to 3, wherein
the component (71) is an insulating member.

8. The power storage device according to any one of claims 1 to 3, wherein
the component (22D) is a cooler.

9. The power storage device according to any one of claims 1 to 3, wherein
the component (40A, 40B) is an impact absorbing member (42A, 42B) provided on a cooler (22C).

10. The power storage device according to any one of claims 1 to 3, wherein
the substrate (201) is made of an insulating material, and
the first electrode terminal (11) and the second electrode terminal (12) are connected to the first conductor member (211a) and the second conductor member (211b), respectively, with the first electrode terminal (11) and the second electrode terminal (12) facing vertically downward.
